Europäisches Patentamt

European Patent Office

Office européen des brevets

(11) Publication number: **0 466 221 A1**

# EUROPEAN PATENT APPLICATION

(21) Application number: **91201430.5**

(22) Date of filing: **11.06.91**

(51) Int. Cl.5: **B60N 2/46**

(30) Priority: **11.07.90 IT 3483990 U**

(43) Date of publication of application:
**15.01.92 Bulletin 92/03**

(84) Designated Contracting States:
**AT BE CH DE DK ES FR GB GR IT LI LU NL SE**

(71) Applicant: **NUOVA MEYSTER S.P.A.**
**Via Boetti, 6**
**IT-42100 Reggio Emilia(IT)**

(72) Inventor: **Silvio, Maestri**
**c/p Nuova Meyster S.p.A., Via Boetti, 6**
**I-42100 Reggio Emilia(IT)**

(74) Representative: **Corradini, Corrado et al**
**Studio Ing. C. CORRADINI & C. S.r.l. 4, Via**
**Dante Alighieri**
**I-42100 Reggio Emilia(IT)**

(54) Supplementary arm rest for adding to seats of vehicles, in particular motor vehicles.

(57) The arm rest is of the type comprising a resting member (3) for the user; the support structure (2) comprises means (4) for its fixing to the vehicle, which adapt to different geometrical configurations of the vehicle elements (9); the structure (2) is also able to change the spatial position of the resting member (3) relative to the points at which the structure (2) is fixed to the vehicle elements (9).

FIG.1

This invention relates to a supplementary arm rest for adding to seats of vehicles in general, and in particular to the driving seat in motor vehicles.

In motor vehicles, the driving seat is normally adjacent to another seat, in many vehicle models there being no arm rest provided between the two said seats by the vehicle manufacturer.

Consequently, supplementary seats which can be added and removed are currently manufactured for positioning to the side of the driving seat in order to increase driver comfort and possibly passenger comfort.

Known addable arm rests consist substantially of a resting member for the user's arm, supported by a support arm the lower portion of which is fixed to one side of the seat frame or to the floor of the passenger compartment. However, these vehicle elements (seat frame and floor) generally have a geometrical configuration in the region in which the support arm of the arm rest is applied, which varies from one vehicle model to another (or at least varies between model groups). It is therefore necessary for the support arm in particular, and possibly the whole arm rest, to be of different shape for different vehicle models (or model groups) in order to adapt to them.

Different arm rest models have therefore to be manufactured, stocked, distributed etc., with consequent increased manufacture, storage, distribution and other costs.

The object of the present invention is to obviate said drawbacks by providing a supplementary addable arm rest of universal type, ie able to adapt to different vehicle models within a relatively very large range of models.

Said object is attained by the invention as characterised in the claims.

The arm rest according to the invention can be applied not only to motor vehicles but also to other types of vehicle.

The invention is described in detail hereinafter with reference to the accompanying figures, which illustrate a preferred but not exclusive embodiment thereof.

Figure 1 illustrates the arm rest of the invention, shown partly in frontal view and partly sectioned on a transverse vertical plane.

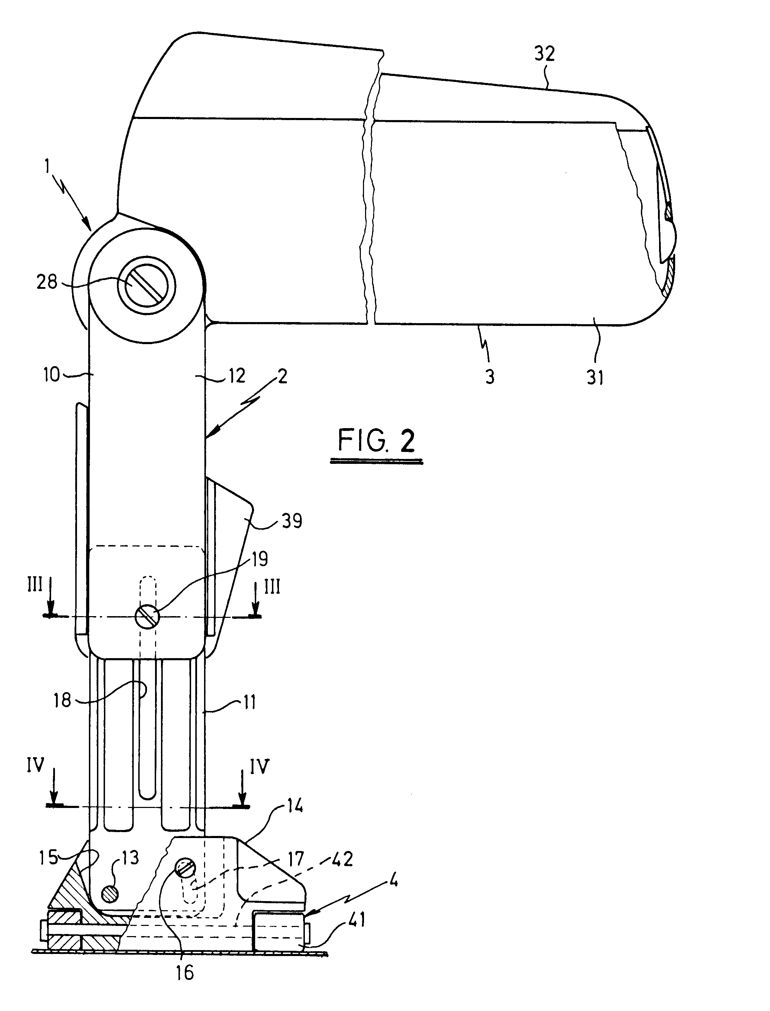

Figure 2 is a partly sectional side view of Figure 1.

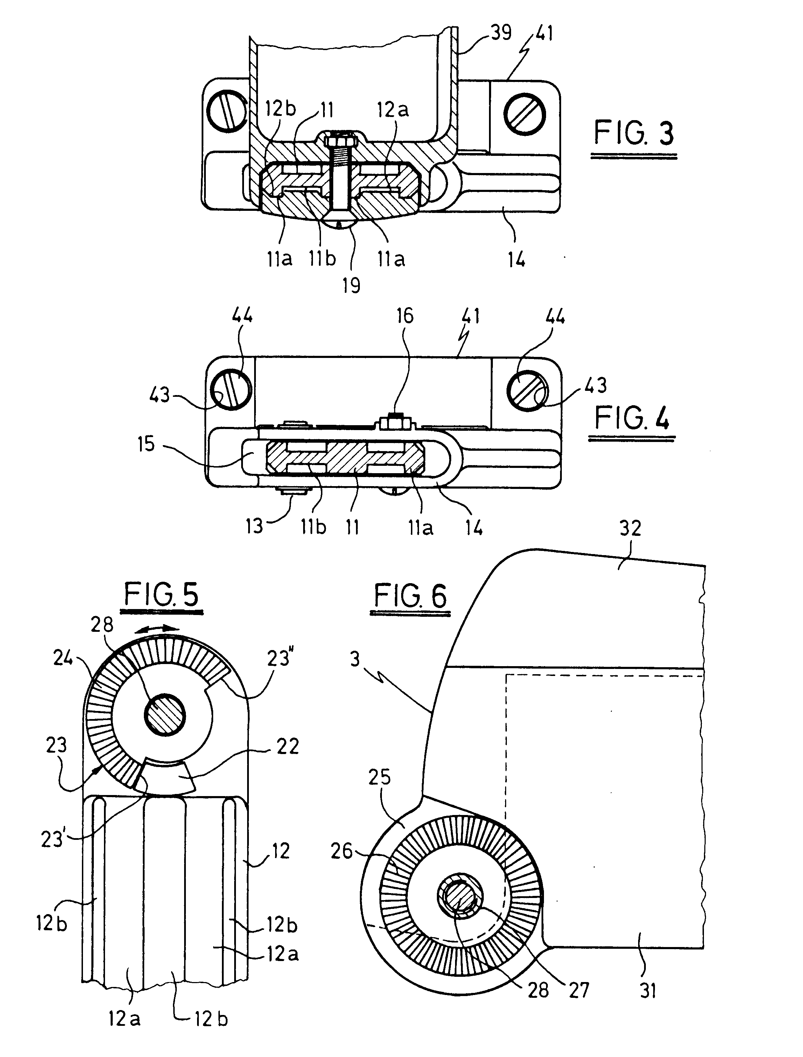

Figure 3 is a section on the line III-III of Figure 2.

Figure 4 is a section on the line IV-IV of Figure 2.

Figure 5 is a section on the line V-V of Figure 1.

Figure 6 is a section on the line VI-VI of Figure 1.

Figures 7A and 7B are schematic representations of two different configurations which a given support structure can assume to adapt to different geometrical configurations of the passenger compartment floor.

In the said figures, the reference numeral 1 indicates overall the arm rest according to the invention, 2 the relative support structure and 3 the resting member for the user's arm.

According to the invention, the support structure 2 comprises means 4 for fixing the structure to vehicle elements, said means 4 adapting to different geometrical configurations of said vehicle elements. The support structure 2 also enables the spatial position of the resting member 3 to be varied relative to the points at which the structure 2 is fixed to the vehicle elements. In other words, the structure 2 enable the height and the inclination of the resting member 3 to be varied relative to the floor, and enables the forward, rearward and side position of the member 3 to be varied relative to the seat.

The support structure 2 comprises two parallel, side-by-side uprights 10 arranged to support the resting member 3. Said uprights 10 are substantially flat and upwardly elongate in shape, their major faces lying in vertical planes longitudinal with respect to the vehicle, the vertical central axes (major axes) of both being in the same transverse vertical plane. The two uprights being identical and symmetrically arranged about the central longitudinal vertical plane through the arm rest.

At the lower end of each upright 10 there is a respective fixing means 4. Each means 4 comprises a plate 41 hinged to the lower end of the respective upright by a pin 42 of horizontal longitudinal axis. The plates 41 are provided with through holes 43 through which screws 44 or equivalent means are inserted to rigidly fix the plates 41 to the base surface (floor) of the passenger compartment.

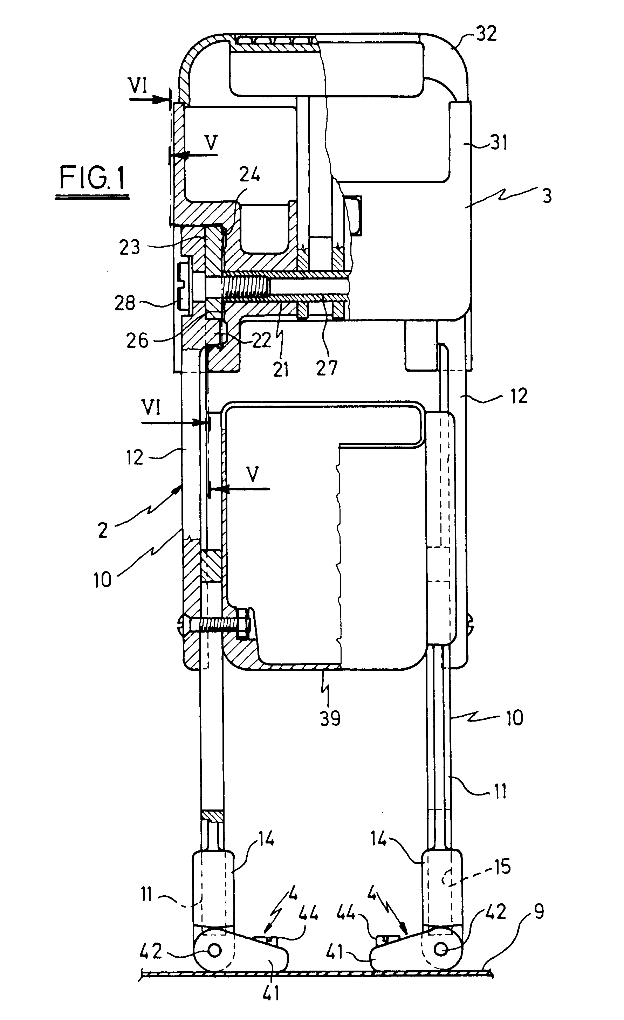

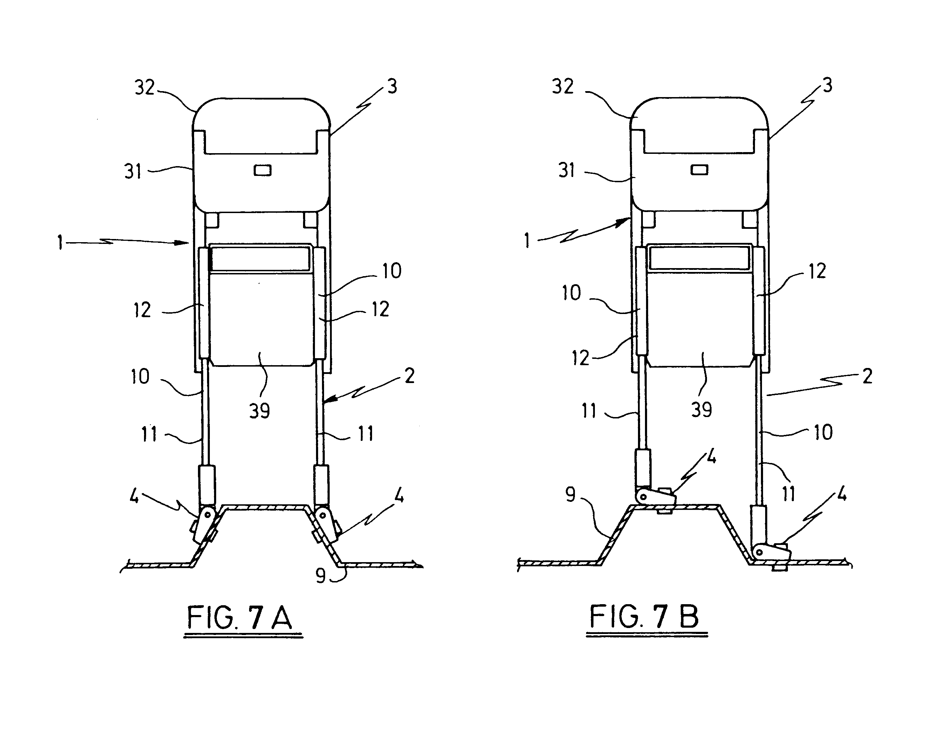

As the plates 41 can assume different attitudes and can be rotated towards the inside or outside of the structure 2, they adapt to many different profiles of the floor 9. Figure 1 shows the application of the arm rest to a flat horizontal floor. Figures 7A and 7B show two different examples of its application to two different geometrical configurations of the floor 9, where the floor 9 is shaped to form a tunnel for the vehicle motion transmission members.

In practice, because of the described fixing means 4 it is possible to adapt a given arm rest 1 to numerous vehicle models. At its lower end, each upright 10 is hinged by a pin 13 of horizontal transverse axis to a respective fixing means. Suitable means are also provided to lock the upright 10 in positions of different inclination to the vertical.

In detail, the support structure 2 comprises for each upright 10 an end member 14 with an upwardly facing cavity 15 for containing the lower end of the respective upright 10. The cavity 15 has a width (in the transverse direction) substantially equal to the width of the lower end of the upright 10 and a longitudinal dimension greater than the corresponding longitudinal dimension of the end of the upright 10 in order to enable the upright 10 to rotate about the pin 13 and hence in a vertical longitudinal plane through a predetermined angle (of about 20$x$ in the figures).

The lower end of the upright 10 is hinged to the relative member 14 by said pin 13. In addition for each member 14 there is provided a bolt 16 to tighten the side walls of the member 14 against the end of the upright 10. Said bolt 10 passes through a slot 17 provided in the upright 10 and through two holes of exact size provided in the member 14. The slot 17 extends along an arc centered on the axis of the pin 13 and hence allows the upright 10 to be rotated. On then tightening the bolt 16, the surfaces of the cavity 15 and the surfaces of the end of the upright 10 become rigid with each other by friction, to thus fix the required position of the upright 10. A respective fixing plate 41 is hinged to the member 14.

Each upright 10 is composed of two substantially flat and upwardly elongate elements 11 and 12 secured rigidly to each other but with the facility for adjusting their relative position along the longitudinal axis of the upright 10 (ie the total length of the upright 10).

In detail, the lower element 11 is provided with projections 11a and grooves 11b extending parallel to the major axis. In the same manner the upper element 12 is provided with projections 12a and grooves 12b to engage the grooves 11b and the projections 11a respectively. In addition, the element 11 is provided with a long axially extending slot 18, a bolt 19 passing through the slot 18 and through a hole of exact size provided in the element 12. On tightening the bolt 19 the two elements 11 and 12 are clamped together, so fixing the two elements 11 and 12 rigidly together by friction.

A box member 39 can be provided between the two uprights 10 and be fixed rigidly to the two uprights 10 by the said bolts 19 in order to stiffen the support structure 2. Said member 39 comprises a cavity which faces upwards so that it can also act as an object holder.

The arm rest 1 shown in the figures is of the type in which the rear end of the resting member 3 is pivoted on a horizontal transverse axis to the upper end of the support structure 2 so that it can rotate between two limiting angular positions. These positions correspond to the substantially horizontal "lowered" position in which the member 3 acts as a rest for the arm, and the "raised" position in which the member 3 is raised beyond the vertical position and is substantially parallel to the profile of the seat back rests. The raised position can be used to enable a person to pass between two adjacent seats, to give access to the space below the arm rest, or for other reasons.

The member 3 is hinged to the two upper ends of the uprights 10 by a pin 21 of horizontal transverse axis. The two uprights 10 lie on the outside of and against the rear end of the resting member 3.

Each upright 10 has a projection 22 which projects transversely from a major face of its element 12 and extends towards the member 3. Said projection 22 is located close to the axis of the pin 21.

At each projection 22 there is a vertical longitudinal plate 23 centered on the axis of the pin 21 and traversed by it. The plate 23 has two edges 23', 23'' arranged to abut against the projection 22 and is secured rigidly to the resting member 3 but such that its angular position relative to the member 3 can be adjusted. The two positions of the member 3 in which the edges 23' and 23'' abut against the projection 22 determine said "raised" and "lowered" limiting angular positions of the member 3.

In detail, the plate 23 is substantially in the form of a circular sector (with an angle of about 200$x$ in the figure) delimited by the two edges 23' and 23''. At the centre it comprises a hole for passage of the pin 21. On a flat face it comprises a toothed surface portion (in the form of a ring portion) in which the ridges of the teeth extend in the same plane and converge towards the axis of the pin 21.

At each plate 23, the rear portion of the member 3 has a face 25 lying vertically and longitudinally, and against which the toothed surface 24 of the plate 23 lies. The face 25 is provided with toothing 26 having teeth equal and symmetrical to the teeth of the portion 24 and arranged to engage them.

The pin 21 comprises a tubular element 27, into the threaded ends of which there are screwed two respective screws 28 to clamp the plate 23 against the face 25. The teeth of 23 and 25 rigidly secure the plate 23 and member 3 together while at the same time enabling the angular position of the plate 23 relative to the member 3 to be varied to produce a large number of different positions.

The screw 28 also serves to hinge the member 3 to the element 12 of the upright 10.

As already seen, the fixing means 4 enable the structure 2 to be fixed to numerous different configurations of the floor 9.

In addition, as the uprights 10 can rotate about the pin 13, they can be positioned at any required inclination (within the allowable angle of rotation). For example they can be inclined at the same angle as the seat back rest.

Moreover, as the length of the uprights 10 can be varied, the resting member 3 can be positioned at any desired level. In particular, in some cases, as shown in Figure 7B, one upright 10 can be set longer than the other to adapt the structure 2 to the specific configuration of the floor 9.

Again, because of the facility for varying the angular position of the plate 23 relative to the member 3, the member 3 can be set in the required "lowered" position (which is normally horizontal or nearly horizontal) independently of the inclination (in the vertical longitudinal plane) of the uprights 10. To achieve this, the plate 23 must be tightened against the face 25 in a position such that when the member 3 is in the required "lowered" position, one edge 23' or 23" abuts against the projection 22 to prevent lowering of the member 3.

In the illustrated embodiment, the resting member 3 comprises a box element 31 defining the lower part of the member 3. Said element 31 is internally hollow with its cavity facing upwards so that it can hold objects. A cover element 32 is hinged to the element 31 to cover the cavity of the member 3 and define the element on which the arm of the user rests. The element 32 is hinged to the element 31 by said pin 21 provided in the rear end of the member 3.

Numerous modifications can be made to the device of the invention, but without leaving the scope of the inventive idea as hereinafter claimed.

**Claims**

1.  A supplementary arm rest for adding to seats of vehicles in general, and in particular to motor vehicles, of the type comprising a resting member (3) for the user's arm, supported by a support structure (2), characterised in that the support structure comprises, for its fixing to vehicle elements (9), means (4) able to adapt to different geometrical configurations of said vehicle elements (9), the support structure (2) also being able to vary the spatial position of the resting member (3) relative to the points at which the structure (2) is fixed to said vehicle elements (9).

2.  An arm rest as claimed in claim 1, characterised in that each fixing means (4) comprises a plate (41) hinged to the lower end of the support structure (2) by a pin (42) with its axis of rotation horizontal and longitudinal, said plate (41) being fixable to the base surface (9) of the passenger compartment by screws (44) or equivalent means.

3.  An arm rest as claimed in claim 1, characterised in that the support structure (2) comprises:
    - at least one upright (10) supporting the resting member (3) and hinged at its lower end, by a pin (13) of horizontal transverse axis, to a fixing means (4) positioned at the lower end of the upright (10);
    - means for locking the upright (10) at different inclinations to the vertical.

4.  An arm rest as claimed in claims 2 and 3, characterised by comprising, for each upright (10):
    - an end member (14) comprising an upwardly facing cavity (15) for containing the lower end of the upright (10), said cavity (15) having its longitudinal dimension greater than the corresponding longitudinal dimension of the end of the upright (10) in order to enable the upright (10) to rotate in a vertical longitudinal plane, said end of the upright (10) being hinged to the end member (14) by said pin (13);
    - a bolt (16) able to clamp the side walls of the end member (14) against the lower end of the upright (10) and passing through a slot (17) which is provided in the lower end of the upright (10) and extends along an arc centered on the axis of said pin (13);
    - said fixing plate (41) being hinged to said end member (14) on a horizontal longitudinal axis.

5.  An arm rest as claimed in claim 3, characterised in that said upright (10) comprises two upwardly elongate elements (11) and (12) secured rigidly to each other but with the facility for adjusting their relative position along the longitudinal axis of the upright (10).

6.  An arm rest as claimed in claim 2, characterised in that the support structure (2) comprises two mutually parallel and facing uprights (10) arranged to support the resting member (3), to their lower end there being hinged a respective fixing plate (41).

7.  An arm rest as claimed in claim 6, characterised in that the support structure (2) comprises a box member (39) fixed rigidly to the uprights (10) at an intermediate height to act both as an element for stiffening the structure (2) and as an object holder.

8. An arm rest as claimed in claim 1, of the type in which the resting member (3) is pivoted at (21) on a horizontal transverse axis to the upper part of the support structure (2) and with the facility for rotating between two limiting angular positions, characterised by comprising:
   - at least one transverse projection (22) provided on the support structure (2) close to the axis of the pin (21);
   - at least one vertical longitudinal plate (23) centered on the axis of the pin (21) and comprising two edges (23') and (23'') arranged to abut against said projection (22), said plate (23) being secured rigidly to the resting member (3) but such that its angular position relative to the member (3) can be adjusted;
   - the two positions of the member (3) in which the two edges (23') and (23'') abut against the projection (22) determining said limiting angular positions.

9. An arm rest as claimed in claim 8, characterised in that:
   - said plate (23) is in the form substantially of a circular sector delimited by said two edges (23') and (23'') and comprises on one of its flat faces a toothed surface portion (24) in which the ridges of the teeth extend in the same plane and converge towards the axis of the pin (21);
   - said resting member (3) comprises in correspondence with each plate (23) a vertical face (25) against which the toothed surface of the plate (23) lies and which is provided with toothing having teeth symmetrical to the teeth of the plate (23) and arranged to engage them;
   - said pin (21) comprises a central element (27) and at least one screw (28) which is screwed coaxially into the end of the central element (27), said screw (28) being arranged to clamp said plate (23) against said face (25) of the resting member (3).

10. An arm rest as claimed in claim 1, characterised in that the resting member (3) comprises:
   - a box element (31) provided with an upwardly facing cavity able to contain objects;
   - an upper cover element (32) hinged to the box element (31) and arranged to cover the cavity thereof.

FIG.1

FIG. 2

FIG. 3

FIG. 4

FIG. 5

FIG. 6

FIG. 7 A

FIG. 7 B

EP 0 466 221 A1

European
Patent Office

EUROPEAN SEARCH
REPORT

Application Number

EP 91 20 1430

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 633 566   (VANDAMME)<br>* page 3, column 5 - page 6, column 37; figures 1-5 * * | 1 | B 60 N 2/46 |
| Y | | 3,5,8-10 | |
| | − − − | | |
| X | GB-A-532 900   (STABLEFORD) | 1 | |
| | − − − | | |
| Y | US-A-4 828 323   (BRODERSEN)<br>* column 2, line 66 - column 6, line 6; figures 1-6 * * | 3,5 | |
| A | | 1,2 | |
| | − − − | | |
| Y | EP-A-0 018 662   (UOP)<br>* page 5, line 15 - page 9, line 35; figures 8-14 * * | 3 | |
| A | | 1 | |
| | − − − | | |
| Y | DE-A-3 529 957   (VIOL)<br>* claims; figures * * | 5 | |
| A | | 1,6 | |
| | − − − | | |
| Y | FR-A-2 127 924   (UNIVERSAL OIL PRODUCTS)<br>* claims 1,4; figures 1-4 * * | 8,9 | |
| A | | 1 | TECHNICAL FIELDS SEARCHED (Int. Cl.5) |
| | − − − | | |
| Y | US-A-4 792 184   (LINDBERG)<br>* claim 1; figure 1 * * | 10 | B 60 N |
| A | | 1 | |
| | − − − − − | | |

The present search report has been drawn up for all claims

| Place of search | Date of completion of search | Examiner |
|---|---|---|
| The Hague | 11 October 91 | GATTI C. |